(19) **Europäisches Patentamt European Patent Office Office européen des brevets**

(11) **EP 1 625 433 B1**

(12) **EUROPEAN PATENT SPECIFICATION**

(45) Date of publication and mention of the grant of the patent:
**17.09.2008 Bulletin 2008/38**

(51) Int Cl.:
*G02B 6/12* (2006.01)          *C03C 25/60* (2006.01)
*C03C 25/62* (2006.01)          *C03C 3/06* (2006.01)

(21) Application number: **04709909.8**

(22) Date of filing: **10.02.2004**

(86) International application number:
**PCT/US2004/003918**

(87) International publication number:
**WO 2004/095096 (04.11.2004 Gazette 2004/45)**

(54) **METHOD AND APPARATUS FOR THE PHOTOSENSITIZATION OF OPTICAL FIBER**

VERFAHREN UND VORRICHTUNG ZUR STEIGERUNG DER LICHTEMPFINDLICHKEIT VON OPTISCHEN FASERN

PROCEDE ET APPAREIL POUR LA PHOTOSENSIBILISATION DE FIBRES OPTIQUES

(84) Designated Contracting States:
**AT BE BG CH CY CZ DE DK EE ES FI FR GB GR HU IE IT LI LU MC NL PT RO SE SI SK TR**

(30) Priority: **04.04.2003 US 406926**

(43) Date of publication of application:
**15.02.2006 Bulletin 2006/07**

(73) Proprietor: **3M Innovative Properties Company St. Paul MN 55133-3427 (US)**

(72) Inventors:
• **DOWER, William V.,
Austin, TX 78726-9000 (US)**
• **VISWANATHAN, Nirmal K.,
Austin, TX 78726-9000 (US)**
• **PAOLUCCI, Dora M.,
Saint Paul, MN 55133-3427 (US)**
• **BARRERA, Michael D.,
Saint Paul, MN 55133-3427 (US)**

(74) Representative: **Vossius & Partner
Siebertstrasse 4
81675 München (DE)**

(56) References cited:
**EP-A- 0 569 182          US-A- 5 901 264
US-A1- 2003 039 747          US-A1- 2003 074 925**

**Description**

The present invention relates to an apparatus and method for increasing the photosensitivity of glassy materials. Specifically, in one aspect, the present invention comprises a method for rapidly diffusing hydrogen or deuterium into an optical fiber from a gas mixture having a low total hydrogen content.

Optical fibers and optical fiber devices are widely used in signal transmission and handling applications. Optical fiber-based devices are vital components in today's expanding high-volume optical communications infrastructure. Many of these devices rely on fiber Bragg gratings (FBG's) to manipulate light. An FBG is an optical fiber with periodic, aperiodic or pseudo-periodic variations of the refractive index along its length in the light-guiding region of the waveguide. The ability to produce these refractive index perturbations in a fiber is a key to the manufacture of FBG's and, hence, a number of optical components, such as optical sensors, wavelength-selective filters, and dispersion compensators.

Gratings are written in optical fiber usually via the phenomenon of photosensitivity. Photosensitivity is defined as the effect whereby the refractive index of the glass is changed by actinic radiation-induced alterations of the glass structure. The term "actinic radiation" includes visible light, UV, IR radiation and other forms of radiation that induce refractive index changes in the glass. A given glass is considered to be more photosensitive than another when a larger refractive index change is induced in it with the same delivered radiation dose.

The level of photosensitivity of a glass determines how large an index change may be induced upon exposure to photonic radiation and therefore places limits on grating devices that may be fabricated practically. Photosensitivity also affects the speed in which a desired refractive index change may be induced in the glass by a given radiation intensity. By increasing the photosensitivity of a glass, one may induce larger index perturbations in it at a faster rate.

The intrinsic photosensitivity of silica-based glasses, the main component of high-quality optical fibers, is not very high. Typically index changes of only about $10^{-5}$ are possible using standard germanium doped fiber.

However, it has been observed that by loading the glass with molecular hydrogen before irradiating it with actinic radiation, one may increase significantly the photosensitivity of the glass. Exposing Ge-doped silica optical fibers to pure hydrogen or pure deuterium atmospheres at certain temperatures and pressures photosensitizes the fibers. Index changes as large as $10^{-2}$ have been demonstrated in hydrogenated silica optical fibers. See, e.g., United States Patent Nos. 5,235,659 ('659), 5,287,427, and 5,500,031, a continuation-in-part of the '659 patent.

Most of the gratings written today by industry involve about 5 cm (2 inches) or less of the length of a fiber, depending on the type of grating to be written. Traditionally, it has been taught to place an entire length of optical fiber in a vessel containing pure hydrogen or pure deuterium atmospheres at certain temperatures and pressures. The grating manufacturing process usually entails a first process of placing a fiber spool in a hydrogen or deuterium containing vessel, placing the vessel in an oven and loading the entire fiber with hydrogen through the fiber's polymer coating.

Once the length of fiber has been hydrogen-loaded, the coating is stripped (mechanically, chemically or by other means) from the area where the grating is to be written. A technician then uses a source of actinic radiation to write each grating individually. The fibers are then annealed by again heating the fiber to reduce the degradation curve of the gratings. The portion of the fiber that was stripped is then recoated.

To achieve the desired level of hydrogen in the optical fiber with conventional hydrogenating methods, the fiber is typically exposed to a pure hydrogen atmosphere for several days and, in some cases, for several weeks. Exemplary exposures include 600 hours (25 days) at 21°C and 738 atm or 13 days at 21°C at 208 atm. Obviously, such long exposures extend the time required to fabricate optical devices that rely on photosensitive glass.

In response to the desire for faster and more efficient hydrogen loading methods, 3M Company developed a process for accelerated hydrogen loading using higher temperatures and/or pressures. US 200212115 describes such a process.

Pure hydrogen or deuterium loading atmospheres, under any conditions, present safety and cost concerns. Hydrogen is highly flammable. Deuterium is often used due to the resulting improvements in loss due to absorption at wavelengths of interest in telecommunications applications. However, the cost of deuterium is high, and a more efficient use of the gas is preferred. It would be desirable to be able to benefit from the hydrogen loading photosensitization effect while reducing some of the associated risks and costs.

At least one aspect of the current invention is a method for increasing the photosensitivity of a glassy material comprising placing the glassy material in a pressure chamber; pressurizing the chamber with a mixture of gases, the mixture comprising hydrogen and at least one diluent gas; wherein the hydrogen in the mixture has a first partial pressure and the diluent gas in the mixture has a second partial pressure; and exposing the glassy material to the gas mixture at a prescribed temperature and total pressure.

At least one aspect of the current invention is a method for manufacturing an optical device comprising placing a glassy material in a pressure chamber; pressurizing the chamber With a mixture of gases, the mixture comprising hydrogen and at least one diluent gas; exposing the glassy material to the gas mixture at a prescribed temperature and total pressure; and irradiating the glassy material with actinic radiation. In at least one embodiment of the invention, the optical device may be an optical grating and the actinic radiation may be patterned.

At least one aspect of the current invention is an optical fiber having increased photosensitivity produced by the method comprising placing the optical fiber in a pressure chamber; pressurizing the chamber with a mixture of gases, the mixture comprising hydrogen and at least one diluent gas; hydrogenating the optical fiber at a prescribed temperature and total pressure; and exposing the optical fiber to a pattern of actinic radiation.

At least one aspect of the current invention is an optical device prepared by a method comprising placing the glassy material in a pressure chamber; pressurizing the chamber with a mixture of gases, the mixture comprising hydrogen and at least one other diluent gas; exposing the glassy material to the gas mixture; and irradiating the glassy material with actinic radiation. In at least one embodiment of the invention, the optical device may be an optical grating and the actinic radiation may be patterned.

At least one aspect of the current invention relates to a method of utilizing hydrogen partial pressures near or below 0.1 MPa (one atmosphere) in a high pressure gas mixture, which can generate changes in the refractive index of a glassy material in excess of $7x10^{-5}$, using conventional fibers. Sensitizing fibers with such low partial pressures of $H_2$ or $D_2$ allows significant cost savings and a reduction of some safety concerns while permitting fibers to be sufficiently sensitized.

Definitions:

As used herein, the following terms have the defined meanings:

- The term "hydrogen" as used herein generally refers to hydrogen gas ($H_2$), but also includes deuterium gas ($D_2$) and hydrogen-deuterium gas (HD).
- The term "diluent gas" as used herein is a gas or supercritical fluid that does not chemically react with hydrogen or the glassy material under the process conditions.
- The term "partial pressure" as used herein refers to the molar fraction of a component in a mixture of gasses or supercritical fluids multiplied by the total pressure of the mixture.
- The term "enhancement factor" or "amplification factor" as used herein is defined as the ratio of the pressure of a pure hydrogen-loaded sample divided by the partial pressure of hydrogen in a mixed gas sample, which would result in the same level of internal hydrogen content in the fiber (as measured by either loss measurements, or photosensitivity measurements).

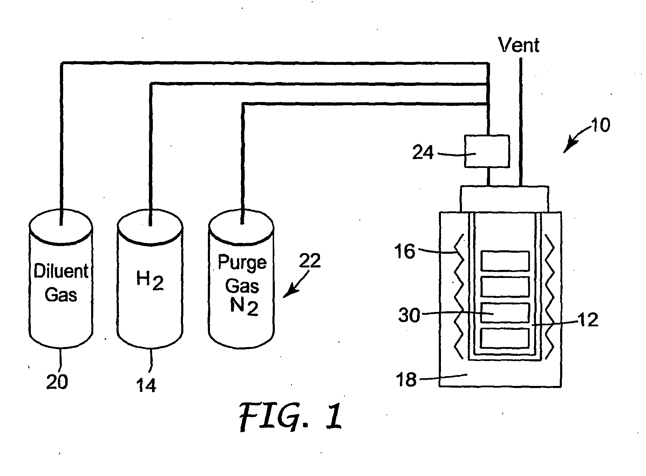

Figure 1 is a simplified schematic diagram of a first embodiment of a hydrogen loading apparatus in accordance with the present invention.

Generally, in order to be an improvement over unsensitized fiber, a refractive index change due to UV exposure above about $5x10^{-5}$ is desirable. Contrary to the present invention, in a pure high pressure hydrogen atmosphere, a typical grating-quality fiber can be photosensitized by exposure at 60°C for 3 days to give an index change of $1 \times 10^{-3}$. Alternatively, accelerated photosensitization of the same fiber may be done at high temperatures, e.g., 260°C, for 10 minutes in a pure high pressure hydrogen atmosphere, resulting in an index change of $4 \times 10^{-4}$.

Pressures of pure hydrogen less than 1 MPa have been observed to be insufficient to achieve desired levels of sensitivity for typical fibers. In contrast, the present invention utilizes hydrogen partial pressures less than 1 MPa, more typically near or below 0.1 MPa (one atmosphere) to generate changes in the refractive index of a glassy material in excess of $7x10^{-5}$ using conventional fibers in a high pressure gas mixture that includes hydrogen. Sensitizing fibers with such low partial pressures of $H_2$, $D_2$, or HD allows significant cost savings and a reduction of some safety concerns while permitting fibers to be sufficiently sensitized. This photosensitization process applies to other material systems, such as planar waveguides.

**Figure 1** is a simplified schematic diagram of an embodiment of a hydrogen loading apparatus **10** in accordance with the present invention. The hydrogen loading apparatus **10** includes a pressure vessel **12,** a hydrogen source **14** and a diluent gas source. The apparatus **10** further includes a heater unit **16** and accompanying insulation **18** placed around the pressure vessel **12**. A source of a purge gas **22,** such as $N_2$, may also be provided.

According to the method of the present invention, a glassy material, such as planar waveguides, optical fiber, and the like is placed in a pressure chamber. The chamber is then pressurized to at least about 40 MPa, preferably at least 100 MPa, with a mixture of gases, the mixture comprising hydrogen and at least one diluent gas. In one embodiment, the pressure, temperature, and composition of this mixture are selected such that the fugacity of the hydrogen in the mixture is greater than the fugacity of pure hydrogen under the same partial pressure and temperature conditions. In one embodiment, the fugacity of the hydrogen in the mixture is at least twice that of pure hydrogen. In another embodiment, it is at least five times greater. This mixture is used to hydrogenate the glassy material. The initial partial pressure of hydrogen in the mixture is typically less than 1 MPa and the total pressure and the volume concentration of hydrogen in the gas mixture is typically less than or equal to 4%.

The gas mixture can be formed either by pressurizing the chamber from a source containing already mixed gasses, with a predetermined concentration ratio, or by forming the mixture in situ. In the case where the chamber is first filled with pure hydrogen and then a diluent gas is added, the initial pressure of pure hydrogen will be less than the initial partial pressure of hydrogen after it has been mixed with the diluent gas. This excluded volume effect is an increase in the partial pressure of a component in a mixture of gasses (not predicted by the ideal gas law), which is observed when a diluent gas is added and the pressure of the mixture is increased. The increases in the fugacity of hydrogen in dilute high pressure mixtures which are taught in this invention are distinct from the excluded volume effect.

The diluent gas is selected from the group consisting of noble gases (argon (Ar), neon (Ne), and the like), partially or completely halogenated (especially fluorinated) hydrocarbons, carbon monoxide, carbon dioxide ($CO_2$), nitrogen ($N_2$), nitrous oxide ($N_2O$), small hydrocarbons (methane ($CH_4$), ethane ($C_2H_6$), propane ($C_3H_8$) and the like), sulfur hexafluoride and other substantially non-reactive gasses which significantly increase the fugacity of hydrogen when used as the major component in a mixture with hydrogen.

The method of photosensitizing a glassy material may comprise a further step of heating the gas mixture to at least 50°C, more preferably to at least 80°C. For accelerated photosensitization processes, the gas mixture may be heated to at least 250°C.

The resulting photosensitive glassy material typically has the first overtone hydrogen absorption peak value greater than $1 \times 10^{-3}$ dB/m. The hydrogen loading is in direct relation to the fugacity of the hydrogen during the loading process. In systems with diluent gasses, the fugacity of the hydrogen will depend on the total pressure, the temperature of the system, the identity of the gasses, and the partial pressure of the hydrogen.

The resulting photosensitive glassy materials, or portions thereof, may then be exposed to actinic radiation to alter their refractive index. The actinic radiation, or portion of fiber exposed to actinic radiation, may be patterned. For example, hydrogen-loaded fibers may be used to create optical devices including optical gratings such as Bragg gratings and Bragg grating-based devices.

Examples:

**Test Methods**

The concentration of hydrogen that diffused into the fibers was measured and quantified using two different methods. In the first method, the absorbance peak ($\Delta\alpha$) at 1.24 microns due to hydrogen in the fiber core was measured using the cutback method described hereafter.

Hydrogen absorption in germano-silicate fibers has a characteristic absorbance peak due to a first absorption overtone at 1.24 microns. The concentration of hydrogen diffused into the fiber under different loading conditions may be calculated by measuring the absorbance peak ($\Delta\alpha$). The measurement requires launching a broadband light source having a wavelength ($\lambda$) between about 1.2 microns and 1.3 microns (83437-A, Agilent Technologies, Palo Alto, CA) through the fiber and measuring the changes over distance using an optical spectrum analyzer (AQ 6315-A, Ando Electric Co., Ltd. Tokyo, Japan). The method known as the cutback method involves coupling fiber to the source and measuring the power out of the far end. The fiber is then cut near the detector, reconnected, and the power measured again. By knowing the power at the source ($P_S$) and at the end ($P_E$) of the fiber and the length of the fiber (L), the absorbance peak (in dB/m) may be determined by calculating $[(P_E - P_S)/L]$. Typically three cutback measurements per fiber per loading condition are preformed and the average values for calculating the enhancement are compared.

In the second method, the refractive index change due to UV-writing a Bragg grating in the photosensitized fiber was calculated from a measurement of the grating strength (in transmission) as a function of the write time. The UV-induced refractive index change in the fiber is directly related to its photosensitivity and to the concentration of hydrogen diffused into the fiber. A frequency doubled CW Ar+ laser (sabre® FreD™ laser, Coherent, Santa Clara, CA) operating at 244 nm was the UV source used for writing grating in the fibers hydrogen loaded under different conditions. An FBG (fiber Bragg grating) fabrication system based on a Talbot interferometer was used to write gratings in the test fibers at a fixed UV power of 100 mW with a spot size of 1 mm x 0.1 mm. The grating growth was monitored in transmission as a function of time during the grating inscription using a computer controlled optical spectrum analyzer (Q 68384, Advantest Corporation, Tokyo, Japan). The refractive index modulation $\Delta n$ induced in fibers as a function of time during the grating inscription may be calculated from the Bragg wavelength $\lambda_B$, the grating length Lg and the transmission minimum of the grating $T_{min}$ as

$$\Delta n(t) = \left(\lambda_B / \pi L_g\right) \tanh^{-1}\left[\sqrt{1 - T_{min}(t)}\right]$$

Typically three gratings were written for approximately 10 minutes in each fiber. However, in fibers with increased photosensitivity, the grating strength exceeded the dynamic range of the measurement system (approximately 30 dB maximum) within a few minutes of writing, so the write time was decreased to 2 - 5 minutes rather than the 10 minute write time that was originally used. The average value of $\Delta n$ calculated is used to compare the fiber photosensitivity of different fibers subjected to different hydrogen loading conditions. Comparing the $\Delta\alpha$ and $\Delta n$ values obtained for both the standard and dilute $H_2$ loading conditions presently disclosed, it is possible to calculate the enhancement factor discussed in this invention.

### The Fibers

Referring again to **Figure 1,** a glassy material, such as a spool **30** of silica glass optical fiber having a Ge and/or B-doped core and/or cladding was provided. Suitable fibers may be readily obtained from companies such as Coming, Inc. of Coming, NY. Methods for the manufacture, doping and coating of optical fibers are well known to those skilled in the art. A glassy material is defined as a material having no long-range structural order and being sufficiently solid and rigid enough not to exhibit flow on an observable time scale.

Two different types of single-mode fibers were used in this study each with an average core germanium concentration of 3.5-mole percent (SMF-28™ optical fiber available from Corning, Corning, NY) for Control Examples (CE) 1 to 7 and Examples 8 to 23, and 5-mole percent (PureMode™ HI 1060 optical fibers available from Coming, Coming, NY) for Control Examples 24 to 30 and Examples 31 to 43.

### Control Examples

The control samples were prepared using a contemporary hydrogen loading process with a pure, high pressure hydrogen atmosphere. The coated optical fibers to be hydrogenated were wound on a spool 30 and the spool 30 was placed into a pressure vessel 12. The vessel was then purged with nitrogen (Air Products and Chemicals Inc., Allentown, PA) three times and heated up to 80°C. The 80°C vessel was filled with hydrogen (Air Products and Chemicals Inc., Allentown, PA) up to the desired pressure (as indicated in Tables 1 and 2), and the fiber was then exposed to the hydrogen-containing atmosphere for 24 hours. After 24 hours, the pressure vessel was vented and the spools 30 were removed quickly from the vessel 12 and cooled rapidly by placing into a freezer at -4.0°C where the fiber was stored until the degree of photosensitization or hydrogen incorporation could be evaluated or until used to create an optical device.

For each loading condition evaluated, the absorbance per unit length at 1.24 microns ("loss", or $\Delta\alpha$) was determined using the first test method, described above. The sensitivity to grating writing ("dn", or "$\Delta n$") was determined using the second test method, described above.

### Examples

Sets of SMF-28™ optical fibers (Examples 8 to 23) and PureMode™ HI 1060 optical fibers (Examples 31 to 43) were exposed to a mixture of hydrogen in a diluent gas such as with argon, carbon dioxide, nitrous oxide, methane, or ethane.

The coated optical fibers to be hydrogenated were placed inside of the vessel 12 preheated to the desired temperature of 80°C to carry out the photosensitization. In the present examples, the optical fiber was wound on a spool 30 and the spool 30 was placed into a pressure vessel 12. The vessel was then purged with nitrogen three times. According to a method of the present invention some fibers from the same lot of each fiber type were loaded with one part-per-thousand (ppt) concentration of high-purity grade compressed hydrogen gas pre-mixed with either argon or carbon dioxide gases (Air Products and Chemicals Inc., Allentown, PA). For pre-mixed gasses containing hydrogen, the purged 80°C vessel was filled with the mixture at various pressures up to about 100 MPa. For pure gasses, which were to be mixed in the vessel, the 80°C vessel was filled with hydrogen up to about 1 MPa and then vented to about 0.1 MPa (atmospheric pressure). The vessel was then pressurized to about 100 MPa total pressure with the diluent gas, and the pressure was recorded. Peng-Robinson equations of state (D.Y. Peng, D.B. Robinson, Ind. Eng. Chem. Fundam., 15, 59 (1976)) were used to calculate the partial pressure of the hydrogen. The fiber was then exposed to the low partial pressure hydrogen-containing atmosphere for 24 hours at the desired photosensitization temperature. After 24 hours, the pressure vessel was vented and the fibers were removed quickly from the vessel 12 and cooled rapidly by placing into a freezer at -40°C where the fiber was stored until the degree of photosensitization or hydrogen incorporation could be evaluated or until the fiber is used to create an optical device.

For each loading condition evaluated, the absorbance per unit length at 1.24 microns ("loss", or $\Delta\alpha$) was determined under the same conditions as was used for fibers sensitized with pure hydrogen. Similarly, the sensitivity to grating writing ("dn", or "$\Delta n$") was determined under the same conditions as was used for fibers sensitized with pure hydrogen. These results were then used to calculate the pressure of pure hydrogen required to achieve the observed level of either loss or dn. In the case of $CO_2$ diluent gas at approximately 100 MPa and 80°C, this "calculated equivalent

pure $H_2$ pressure required" was consistently in excess of 25 times the actual partial pressure of hydrogen. In the case of Ar diluent gas, the ratio of the calculated effective pressure to the partial pressure was close to 2. The results are shown in Tables 1 and 2.

Samples prepared with 1.37 parts per thousand (ppt) $H_2$ in $CO_2$ at about 100 MPa (partial pressure of $H_2$ = 0.137 MPa) show a change in index with exposure at a level expected to require 5.8 MPa of pure $H_2$. This amplification is over 40 times. When using 1.37 ppt deuterium in $CO_2$ at about 100 MPa (partial pressure of $D_2$ = 0.137 MPa) show a change in index with exposure at a level expected to require 6.27 MPa of pure $D_2$, resulting in an amplification that is 45 times the partial pressure of deuterium in $CO_2$.

Some SMF-28™ optical fibers and PureMode™ HI 1060 optical fibers were exposed to pressures of about 100 MPa of mixtures formed from 0.1 MPa hydrogen with addition of one of the following gasses to a total pressure of 100 MPa: $N_2O$ (nitrous oxide), $CH_4$ (methane) or $C_2H_6$ (ethane). The resulting fibers were measured both for their absorbance per unit length at 1.24 microns ("loss") and their sensitivity to grating writing ("dn"). These were compared to data from fibers sensitized with pure hydrogen. As before, these results were used to calculate the pressure of pure hydrogen required to achieve the observed level of both the loss and the dn. The loss amplification factor for nitrous oxide is about 11. For methane, it is about 45, and for ethane it is about 54. The values obtained from the $\Delta n$ comparisons were typically even larger.

Tables 1 and 2 show the photosensitization results comparing the effects of the contemporary hydrogen loading process to the presently disclosed low pressure hydrogen loading process of SMF-28™ optical fiber and PureMode™ HI 1060 optical fiber, respectively. The first column in the tables designates the means by which the gas mixture was generated. The "pure" designation indicates that the chamber was pressurized with pure $H_2$. The "premix" designation indicates that the gas mixture was prepared by the gas supplier and used as supplied to pressurize the chamber. The "in situ" designation indicates the process of adding about 1 MPa of hydrogen to the vessel, venting the chamber to about 0.1 MPa, and finally pressurizing the chamber to the desired level with the chosen diluent gas. The second column in tables 1 and 2 indicate the diluent gas used in the given experiment. The third column is the mole percent of $H_2$ charged to the vessel. The fifth column is the partial pressure or $H_2$ at the prescribed pressure (column 4) and the loading temperature of 80°C. The sixth column is the loss as measured using the cutback method. The seventh column is a calculated value of the hydrogen pressure that would be required in a pure hydrogen atmosphere to achieve the same loss numbers as measured for the low partial pressure system. The eighth column is the loss amplification factor, which is a ratio of the calculated hydrogen pressure number from column 6 and the actual partial pressure of hydrogen in the system (column 5). The ninth column is the measured change in refractive index of the glass after writing a Bragg grating with U-V radiation for five minutes. Note that in a few cases where larger changes in refractive index were found the measured values were taken from gratings that were written in only two minutes. The tenth column is a calculated value of the hydrogen pressure that would be required in a pure hydrogen atmosphere to achieve the same refractive index change as measured for the low partial pressure system. The eleventh column is the dn amplification factor, which is a ratio of the calculated hydrogen pressure number from column 9 and the actual partial pressure of hydrogen in the system (column 5).

Table 1. Results of photosensitization comparing the contemporary hydrogen loading process to the low pressure hydrogen loading of SMF-28 optical fiber

| Ex. | Method mixture formed | Diluent gas | % $H_2$ | Total Pressure (Mpa) | Partial pressure $H_2$ (Mpa) | Loss | Pure H2 for same loss (Mpa)Calc. | Loss Enhance Factor | Dn | Pure H2 for same Dn (MPa)Calc. | Dn Enhance Factor |
|---|---|---|---|---|---|---|---|---|---|---|---|
| CE1 | pure | - | 100 | 0.00 | 0.00 | 0.0005 | 0.000 | - | 7.11E-05 | 0.081 | - |
| CE2 | pure | - | 100 | 0.83 | 0.83 | 0.0048 | 0.845 | 1.02 | 1.60E-04 | 0.628 | 0.76 |
| CE3 | pure | - | 100 | 2.07 | 2.07 | 0.0123 | 2.310 | 1.12 | 3.70E-04 | 1.926 | 0.93 |
| CE4 | pure | - | 100 | 5.34 | 5.34 | 0.0260 | 4.986 | 0.93 | 9.54E-04 | 5.529 | 1.03 |
| CE5 | pure | - | 100 | 7.34 | 7.34 | 0.0390 | 7.525 | 1.02 | 1.27E-03 | 7.481 | 1.02 |
| CE6 | pure | - | 100 | 10.41 | 10.41 | 0.0537 | 10.396 | 1.00 | 1.76E-03 | 10.506 | 1.01 |
| CE7 | pure | - | 100 | 13.72 | 13.72 | 0.0707 | 13.716 | 1.00 | 2.24E-03 | 13.469 | 0.98 |
| 8 | premix | Ar | 5 | 42.96 | 2.07 | 0.0200 | 3.806 | 1.84 | 7.07E-04 | 4.006 | 1.94 |
| 9 | premix | Ar | 5 | 72.16 | 3.62 | 0.0290 | 5.571 | 1.54 | 1.22E-03 | 7.173 | 1.98 |
| 10 | premix | Ar | 5 | 108.39 | 5.41 | 0.0410 | 7.915 | 1.46 | 1.83E-03 | 10.938 | 2.02 |
| 11 | premix | Ar | 5 | 176.33 | 8.83 | 0.0677 | 13.130 | 1.49 | 2.78E-03 | 16.802 | 1.90 |
| 12 | premix | Ar | 0.1 | 41.06 | 0.04 | 0.0011 | 0.118 | 2.86 | 7.62E-05 | 0.113 | 2.72 |
| 13 | premix | Ar | 0.1 | 77.71 | 0.08 | 0.0014 | 0.173 | 2.22 | 9.73E-05 | 0.242 | 3.11 |
| 14 | premix | Ar | 0.1 | 112.22 | 0.11 | 0.0016 | 0.224 | 1.99 | 1.10E-04 | 0.324 | 2.88 |
| 15 | premix | Ar | 0.1 | 147.10 | 0.15 | 0.0019 | 0.275 | 1.87 | 1.21E-04 | 0.386 | 2.63 |
| 16 | premix | Ar | 0.1 | 181.39 | 0.18 | 0.0021 | 0.325 | 1.79 | 1.41E-04 | 0.510 | 2.81 |
| 17 | in situ | CO2 | 0.13 | 110.20 | 0.14 | 0.0210 | 4.010 | 28.85 | 1.00E-03 | 5.832 | 41.96 |
| 18 | in situ | CO2 | 0.13a | 110.20 | 0.14 | - | - | - | 1.07E-03 | 6.271 | 45.11 |
| 19 | premix | CO2 | 0.1 | 105.60 | 0.11 | 0.0168 | 3.188 | 30.36 | 7.69E-04 | 4.388 | 41.79 |
| 20 | in situ | N2O | 0.13 | 104.29 | 0.14 | 0.0090 | 1.665 | 12.07 | 2.74E-04 | 1.377 | 9.98 |
| 21 | in situ | CH4 | 0.14 | 106.80 | 0.15 | 0.0349 | 6.724 | 45.07 | 1.32E-03 | 8.363 | 56.05 |
| 22 | in situ | C2H6 | 0.15 | 111.66 | 0.17 | 0.0470 | 9.087 | 53.61 | 1.63E-03 | 10.360 | 61.12 |
| 23 | in situ | C2H6 | 0.23 | 47.9 | 0.11 | 0.0037 | 0.63 | 5.82 | - | - | - |

aDeuterium ($D_2$) was used in place of Hydrogen ($H_2$)

EP 1 625 433 B1

Table 2. Results of photosensitization comparing the contemporary hydrogen loading process to the low pressure hydrogen loading process of PUREMODE-1060 optical fiber

| Ex. | Mixture Form | Diluent gas | % $H_2$ | Total Pressure (Mpa) | Partial Pressure $H_2$ (Mpa) | Loss | Pure H2 for same loss (Mpa) Calc. | Loss Enhance Factor | Dn | Pure H2 for same Dn (MPa) Calc. | Dn Enhance Factor |
|---|---|---|---|---|---|---|---|---|---|---|---|
| CE24 | pure | - | 100 | 0.00 | 0.00 | 0 | | | 1.07E-04 | 0.081 | - |
| CE25 | pure | - | 100 | 0.83 | 0.83 | -- | | | 2.40E-04 | 0.627 | 0.76 |
| CE26 | pure | - | 100 | 2.07 | 2.07 | 0.0123 | | | 5.55E-04 | 1.925 | 0.93 |
| CE27 | pure | - | 100 | 5.34 | 5.34 | 0.0253 | | | 1.43E-03 | 5.528 | 1.03 |
| CE28 | pure | - | 100 | 7.34 | 7.34 | 0.0377 | | | 1.91E-03 | 7.498 | 1.02 |
| CE29 | pure | - | 100 | 10.41 | 10.41 | 0.0520 | | | 2.65E-03 | 10.533 | 1.01 |
| CE30 | pure | - | 100 | 13.72 | 13.72 | 0.0684 | | | 3.36E-03 | 13.476 | 0.98 |
| 31 | premix | Ar | 5 | 42.96 | 2.07 | | | | 9.93E-04 | 3.728 | 1.80 |
| 32 | premix | Ar | 5 | 72.16 | 3.62 | | | | 1.80E-03 | 7.049 | 1.95 |
| 33 | premix | Ar | 5 | 108.39 | 5.41 | | | | 2.73E-03 | 10.876 | 2.01 |
| 34 | premix | Ar | 5 | 176.33 | 8.83 | | | | 4.51E-03 | 18.201 | 2.06 |
| 35 | premix | Ar | 0.1 | 41.06 | 0.04 | | | | 1.07E-04 | 0.082 | 1.99 |
| 36 | premix | Ar | 0.1 | 77.71 | 0.08 | | | | 1.37E-04 | 0.205 | 2.64 |
| 37 | premix | Ar | 0.1 | 112.22 | 0.11 | | | | 1.51E-04 | 0.262 | 2.34 |
| 38 | premix | Ar | 0.1 | 147.10 | 0.15 | | | | 1.82E-04 | 0.389 | 2.65 |
| 39 | premix | Ar | 0.1 | 181.39 | 0.18 | | | | 2.07E-04 | 0.495 | 2.73 |
| 40 | in situ | N2O | 0.13 | 104.29 | 0.14 | 0.008 | 1.498 | 10.86 | 2.56E-04 | - | - |
| 41 | in situ | CH4 | 0.14 | 106.80 | 0.15 | 0.034 | 6.761 | 45.32 | 0.00141* | - | - |
| 42 | in situ | C2H6 | 0.15 | 111.66 | 0.17 | 0.047 | 9.393 | 55.42 | 0.00213* | - | - |
| 43 | in situ | C2H6 | 0.23 | 47.90 | 0.11 | 0.0048 | 0.960 | 8.71 | - | - | - |

* 120 sec. UV-exposure during the grating writing process

The chemical processes involved in the grating writing are complex. As such, it is expected that the effects on the fiber writing sensitivity of varying the hydrogen fugacity may be significantly non-linear, particularly at low hydrogen levels. It is likewise expected that the behavior of a particular fiber will depend on the core composition as well as the concentration of hydrogen present. While some variation from one fiber to another in their sensitivity curves is expected, comparisons between the fibers prepared with pure hydrogen and the same fibers prepared from dilute mixtures of hydrogen at high pressures should provide an enhancement value as to the latter which is characteristic of the fugacity of the hydrogen in the mixture used to sensitize the fibers.

The disclosure herein teaches that the photosensitivity of a hydrogen loaded material may be influenced significantly by using mixtures of gasses rather than pure hydrogen during the loading process. With some diluent gasses, hydrogen concentrations in the glassy material were thirty to fifty times higher than expected based on the partial pressure of hydrogen present in the system. Additionally, the concentration of hydrogen in the core of the fiber was discovered to strongly influence the selection of the diluent gas, with some diluent gasses showing 30 times the effect of other diluent gasses at similar conditions of time, temperature, and pressure. Because the choice of diluent gas influenced the sensitization, this amplification effect cannot be attributed to increases in partial pressure and the excluded volume effect alone. Rather, these enhancements are due to the increased fugacity of the hydrogen in the mixtures relative to the fugacity of pure hydrogen at the same partial pressure and temperature. Such a level of amplification allows the hydrogen or deuterium to be used at very low partial pressures, even at or below 0.1 MPa (one atmosphere) under conditions where the sensitization of pure hydrogen is negligible. Such low partial pressures allow significant cost savings as well as a reduction of some safety concerns while permitting fibers to be sufficiently sensitized to permit the manufacture of an optical device in the photosensitized material.

Those skilled in the art will appreciate that the present invention may be used in the manufacture of a variety of optical components. While the present invention has been described with a reference to exemplary preferred embodiments, the invention may be embodied in other specific forms without departing from the scope of the invention. Accordingly, it should be understood that the embodiments described and illustrated herein are only exemplary and should not be considered as limiting the scope of the present invention. Other variations and modifications may be made in accordance with the scope of the present invention.

**Claims**

1.   A method for increasing the photosensitivity of a glassy material, the method comprising:

    a) placing the glassy material in a pressure chamber;
    b) pressurizing the chamber to at least 40 MPa with a mixture of gases, the mixture comprising hydrogen and at least one diluent gas; wherein the hydrogen in the mixture has a first partial pressure and the diluent gas in the mixture has a second partial pressure; and
    c) exposing the glassy material to the gas mixture at a prescribed temperature and total pressure.

2.   The method of claim 1, wherein the diluent gas, the temperature and the first and second partial pressures are selected such that the hydrogen in the mixture has a fugacity that is greater than the fugacity of pure hydrogen under the same conditions of temperature and partial pressure.

3.   The method of claim 1, wherein the partial pressure of hydrogen in the mixture is less than 0.1 MPa.

4.   The method of claim 1, wherein the hydrogen has a volume concentration of less than or equal to 4%.

5.   The method in claim 1, wherein the pressure chamber is first pressurized with hydrogen, and then at least one diluent gas is added to form the mixture at a higher total pressure.

6.   The method in claim 1, wherein the pressure chamber is pressurized with a premixed fluid consisting of hydrogen and at least one diluent gas.

7.   The method of claim 1, further comprising heating the gas mixture to the temperature of at least 250°C.

8.   The method of claim 1, wherein at least one diluent gas is selected from the group consisting of noble gases, nitrous oxide, partially halogenated hydrocarbons, completely halogenated hydrocarbons, carbon dioxide, methane, ethane, propane and sulfur hexafluoride.

9. An optical fiber having increased photosensitivity produced by the method comprising:

    a) placing the optical fiber in a pressure chamber;
    b) pressurizing the chamber to at least 40 MPa with a mixture of gases, the mixture comprising hydrogen and at least one diluent gas; and
    c) hydrogenating the optical fiber at a prescribed temperature and total pressure.

10. An optical fiber as described in claim 9 wherein the temperature and pressure of the mixture are selected such that, at said temperature, the hydrogen has a fugacity in the mixture that is greater than the fugacity of pure hydrogen whose partial pressure equals that of the pressure of the hydrogen in the mixture.


**Patentansprüche**

1. Verfahren zur Steigerung der Lichtempfindlichkeit eines glasartigen Materials, wobei das Verfahren umfasst:

    a) Eingeben des glasartigen Materials in eine Druckkammer;
    b) Unterdrucksetzen der Kammer auf mindestens 40 MPa mit einer Mischung von Gasen, wobei die Mischung Wasserstoff und mindestens ein Verdünnungsgas umfasst; wobei der Wasserstoff in der Mischung einen ersten Partialdruck und das Verdünnungsgas in der Mischung einen zweiten Partialdruck aufweist; und
    c) Aussetzen des glasartigen Materials gegenüber der Gasmischung bei einer eingestellten Temperatur und einem Gesamtdruck.

2. Verfahren nach Anspruch 1, wobei das Verdünnungsgas, die Temperatur und die ersten und zweiten Partialdrücke so ausgewählt werden, dass der Wasserstoff in der Mischung eine Flüchtigkeit aufweist, die höher ist als die Flüchtigkeit von reinem Wasserstoff unter denselben Temperatur- und Partialdruckbedingungen.

3. Verfahren nach Anspruch 1, wobei der Partialdruck von Wasserstoff in der Mischung weniger als 0,1 MPa beträgt.

4. Verfahren nach Anspruch 1, wobei der Wasserstoff eine Volumenkonzentration von weniger als oder gleich 4 % aufweist.

5. Verfahren nach Anspruch 1, wobei die Druckkammer zuerst mit Wasserstoff unter Druck gesetzt wird und dann mindestens ein Verdünnungsgas unter Bildung der Mischung bei einem höheren Gesamtdruck zugegeben wird.

6. Verfahren nach Anspruch 1, wobei die Druckkammer mit einem vorgemischten Fluid bestehend aus Wasserstoff und mindestens einem Verdünnungsgas unter Druck gesetzt wird.

7. Verfahren nach Anspruch 1, ferner umfassend das Erhitzen der Gasmischung auf eine Temperatur von mindestens 250 °C.

8. Verfahren nach Anspruch 1, wobei mindestens ein Verdünnungsgas aus der Gruppe ausgewählt ist bestehend aus Edelgasen, Stickstoff(I)oxid, teilweise halogenierten Kohlenwasserstoffen, vollständig halogenierten Kohlenwasserstoffen, Kohlendioxid, Methan, Ethan, Propan und Schwefelhexafluorid.

9. Optische Faser, die eine erhöhte Lichtempfindlichkeit aufweist, hergestellt durch das Verfahren umfassend:

    a) Eingeben der optischen Faser in eine Druckkammer ;
    b) Unterdrucksetzen der Kammer auf mindestens 40 MPa mit einer Mischung von Gasen, wobei die Mischung Wasserstoff und mindestens ein Verdünnungsgas umfasst; und
    c) Hydrieren der optischen Faser bei einer eingestellten Temperatur und einem Gesamtdruck.

10. Optische Faser, wie in Anspruch 9 beschrieben, wobei die Temperatur und der Druck der Mischung so ausgewählt sind, dass bei dieser Temperatur der Wasserstoff in der Mischung eine Flüchtigkeit aufweist, die höher ist als die Flüchtigkeit von reinem Wasserstoff, dessen Partialdruck dem Druck des Wasserstoffs in der Mischung gleich ist.

**Revendications**

1. Procédé d'augmentation de la photosensibilité d'un matériau vitreux, le procédé comprenant :

   a) la mise en place du matériau vitreux dans une chambre de pression ;
   b) la pressurisation de la chambre à au moins 40 MPa avec un mélange de gaz, le mélange comprenant de l'hydrogène et au moins un gaz diluant ; dans lequel l'hydrogène dans le mélange a une première pression partielle et le gaz diluant dans le mélange a une deuxième pression partielle ; et
   c) l'exposition du matériau vitreux au mélange gazeux à une température et une pression totale prescrites.

2. Procédé selon la revendication 1, dans lequel le gaz diluant, la température et les première et deuxième pressions partielles sont choisis de telle sorte que l'hydrogène dans le mélange a une fugacité qui est supérieure à la fugacité d'hydrogène pur dans les mêmes conditions de température et de pression partielle.

3. Procédé selon la revendication 1, dans lequel la pression partielle d'hydrogène dans le mélange est inférieure à 0,1 MPa.

4. Procédé selon la revendication 1, dans lequel l'hydrogène a une concentration volumique inférieure ou égale à 4 %.

5. Procédé selon la revendication 1, dans lequel la chambre de pression est d'abord pressurisée avec de l'hydrogène, puis au moins un gaz diluant est ajouté pour former le mélange à une pression totale supérieure.

6. Procédé selon la revendication 1, dans lequel la chambre de pression est pressurisée avec un fluide prémélangé constitué d'hydrogène et d'au moins un gaz diluant.

7. Procédé selon la revendication 1, comprenant en outre le chauffage du mélange gazeux à une température d'au moins 250 °C.

8. Procédé selon la revendication 1, dans lequel au moins un gaz diluant est choisi dans le groupe constitué par les gaz rares, l'oxyde nitreux, les hydrocarbures partiellement halogénés, les hydrocarbures entièrement halogénés, le dioxyde de carbone, le méthane, l'éthane, le propane et l'hexafluorure de soufre.

9. Fibre optique présentant une photosensibilité accrue produite par le procédé comprenant :

   a) la mise en place de la fibre optique dans une chambre de pression ;
   b) la pressurisation de la chambre à au moins 40 MPa avec un mélange de gaz, le mélange comprenant de l'hydrogène et au moins un gaz diluant ; et
   c) l'hydrogénation de la fibre optique à une température et une pression totale prescrites.

10. Fibre optique selon la revendication 9, dans laquelle la température et la pression du mélange sont choisies de telle sorte que, à ladite température, l'hydrogène a une fugacité dans le mélange qui est supérieure à la fugacité d'hydrogène pur dont la pression partielle est égale à la pression de l'hydrogène dans le mélange.

Vent

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5235659 A
- US 5287427 A
- US 5500031 A
- US 200212115 B